# DEMANDE DE BREVET EUROPEEN

(11) **EP 4 818 619 A1**
(43) Date de publication de la demande: **07.10.2026**
(21) Numéro de dépôt: 26167088.9
(22) Date de dépôt: 24.03.2026
(51) Int. Cl.: F28D 15/04, F28F 13/18, B33Y 80/00, F28D 15/02

(54) **CALODUC COMPRENANT UN EVAPORATEUR INTEGRANT UN MEDIA POREUX AVEC UNE PORTION OBLIQUE DEPUIS LA PORTION ADIABATIQUE, AFIN D AUGMENTER LES LIMITES DE POMPAGE CAPILLAIRE ET D EBULLITION**

(30) Priorité: 31.03.2025 FR 2503318
(71) Demandeur: Commissariat à l'Énergie Atomique et aux Énergies Alternatives, 75015 Paris (FR)
(72) Inventeur: MARIOTTO, Mathieu, 38054 Grenoble cedex 09 (FR)
(74) Mandataire: Ipsilon

(57) **Abrégé**

Caloduc comprenant un évaporateur intégrant un média poreux avec une portion oblique depuis la portion adiabatique, afin d'augmenter les limites de pompage capillaire et d'ébullition.

L'invention concerne en un caloduc (1) s'étendant le long d'une première direction longitudinale (X), comprenant une enceinte étanche (2) délimitée par au moins une paroi périphérique (10), contenant un fluide de travail et s'étendant entre une première extrémité longitudinale (3), destinée à être échauffée par une source chaude SC pour former, au sein de l'enceinte, un évaporateur (ZE) et une deuxième extrémité longitudinale (4) destinée à être refroidie par une source froide SF pour former, au sein de l'enceinte.

Selon l'invention, l'évaporateur est conçu en intégrant un média poreux (15) de forme permettant l'évacuation de la phase vapeur du fluide de travail du caloduc en retour vers la zone adiabatique à travers une portion oblique sans interférer avec la phase liquide saturant ledit média.

## Description

### Domaine technique

La présente invention concerne un caloduc.

La présente invention vise à proposer un caloduc avec un évaporateur qui permet une configuration de ménisque d'interface liquide-vapeur dit inversé, de sorte à éloigner la limite d'ébullition, et d'atteindre une bonne conductance thermique radiale (au niveau de l'évaporateur.

### Technique antérieure

Un caloduc est un dispositif thermique permettant de transférer une quantité d'énergie depuis une source chaude vers une source froide, distantes d'une certaine longueur.

Un caloduc comporte une enceinte hermétiquement close, un fluide de travail et un réseau capillaire. Lors de la fabrication, tout l'air présent dans le tube caloduc est évacué et on introduit une quantité de liquide pur permettant de saturer le réseau capillaire. Une fois l'enceinte close, et soumis à une source chaude et une source froide, il y a établissement d'un équilibre entre la phase liquide et la phase vapeur.

Sous l'effet d'une source chaude appliquée dans une zone à l'une des extrémités longitudinales, désignée évaporateur, une partie de la phase liquide se vaporise et absorbe le flux thermique sous forme latente en induisant une légère surpression qui provoque le mouvement de la vapeur vers une zone à l'autre extrémité longitudinale, désignée condenseur où la source froide s'applique. Au condenseur, la vapeur se condense et repasse en phase liquide. Le fluide condensé (les condensats) circule dans le réseau capillaire et revient vers l'évaporateur pour refaire un cycle, sous l'effet de forces capillaires, lorsque le caloduc n'est pas soumis à la gravité. Le retour du fluide liquide du condenseur à l'évaporateur est obtenu par pompage capillaire.

En effet, en l'absence de gravité, le moteur du caloduc est le pompage capillaire du fluide qui s'opère au niveau des zones d'interface liquide-vapeur spécifiquement configurées pour qu'un ménisque se forme, résultant de l'angle de contact entre le fluide et le métal constituant le caloduc (lui-même dépendant de la tension superficielle du fluide, et des tensions interfaciales solide/liquide et solide/vapeur). Plus les forces de pompage capillaire sont grandes par rapport aux diverses forces de frottement des phases du fluide avec les parois et entre elles, plus le caloduc est performant et peut transporter une grande quantité d'énergie sur une grande longueur. Les caloducs concernés par cette absence de gravité sont par exemple ceux mis en œuvre dans des conditions de fonctionnement spatiales, comme pour la thermalisation de système de télécommunication des satellites.

En régime terrestre, avec la gravité, la problématique du retour de phase liquide est tout autre, et d'autres configurations d'interface liquide-vapeur/paroi sont mises en œuvre.

Les caloducs à rainures fonctionnent sur le principe du pompage capillaire. Ils comportent un tube, dans lequel la surface intérieure comporte des rainures axiales/longitudinales [1] ou légèrement en forme de spirale. Les caloducs à rainures comportent un cœur vapeur et un réseau capillaire périphérique dans lequel circule la phase liquide. Au niveau de l'établissement de l'interface liquide vapeur, au niveau des rainures, plus la dimension caractéristique de l'interface (ménisque) est petite, plus l'effet de pompage capillaire est important.

Par ailleurs, des rainures profondes permettent d'obtenir une section de passage pour le retour liquide grande, et donc de minimiser la perte de pression.

La puissance maximale que peuvent transporter des caloducs à rainures est généralement fixée par la limite capillaire dont le terme moteur est la pression capillaire, et le terme limitant essentiellement la perte de pression liquide dans les rainures et, dans une moindre mesure les pertes de charge de l'écoulement vapeur.

Les caloducs à rainures réentrantes sont des exemples particuliers de caloducs à rainures, dans lesquels les rainures présentent un canal de liaison étroit par rapport au reste de la rainure, ce qui permet d'augmenter l'effet de pompage capillaire tout en limitant les pertes de charge dans la phase liquide. Ces caloducs sont utilisés principalement dans le domaine spatial, par exemple pour la régulation thermique dans les satellites et/ou les engins spatiaux.

Sur la plage de températures de fonctionnement d'un caloduc, différentes limites physiques peuvent limiter ses performances. La courbe de fonctionnement du caloduc, qui permet de connaitre sa capacité de transport maximum en fonction de la température d'opération, est obtenue par la réunion des courbes correspondant aux différentes limites physiques de fonctionnement qui définissent au final le domaine de fonctionnement du caloduc en termes de puissance maximale qu'il peut transférer.

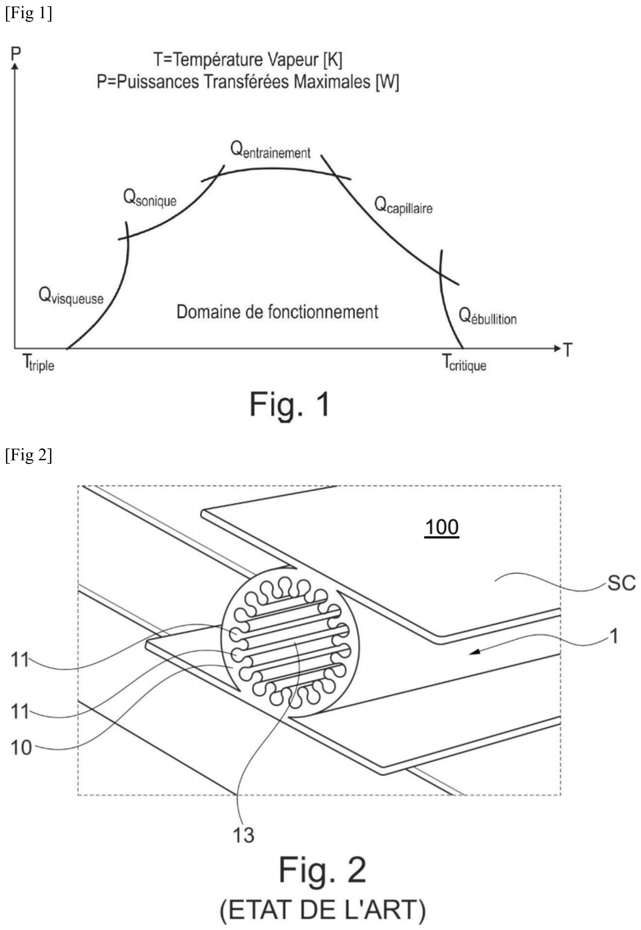

La figure 1 illustre la courbe délimitant le domaine de fonctionnement pour un exemple de caloduc à pompage capillaire. Sur cette figure 1, on rappelle que les portions de courbe Qvisqueuse, Q_{sonique}, Qentraînement, Q_{capillaire}, Q_{ébullition}, définissent respectivement les limites visqueuse, sonique, d'entraînement, capillaire et d'ébullition.

Dans le cadre de l'invention, les inventeurs se sont intéressés plus spécifiquement à la limite d'ébullition.

Cette limite de fonctionnement se définit de manière conservative comme le flux (ou la densité de flux) maximum, pour lequel des bulles créées à la paroi du canal liquide à l'évaporateur peuvent migrer sans être bloquées dans les canaux de liaison jusqu'au ménisque d'interface liquide-vapeur.

La limite d'ébullition a ainsi pour origine la naissance de bulles de vapeur au sein du réseau capillaire, lorsque la densité de flux thermique radial à l'évaporateur devient trop importante.

Ainsi, si la densité de flux radial est trop grande, la circulation du liquide dans la structure capillaire peut être affectée par l'apparition de bulles piégées ou par une congestion d'un grand nombre de bulles qui migrent vers le canal liquide.

Cela perturbe l'hydrodynamique du caloduc, dégrade ses performances et in fine son fonctionnement, voire le stoppe, et entraîne un asséchement de la paroi, ce qui signifie qu'il y a surchauffe au niveau de la source chaude à thermaliser.

De manière conservative, on considère que la limite d'ébullition est le flux ou la densité de flux pour laquelle les premières bulles apparaissent à la paroi de l'évaporateur d'un caloduc.

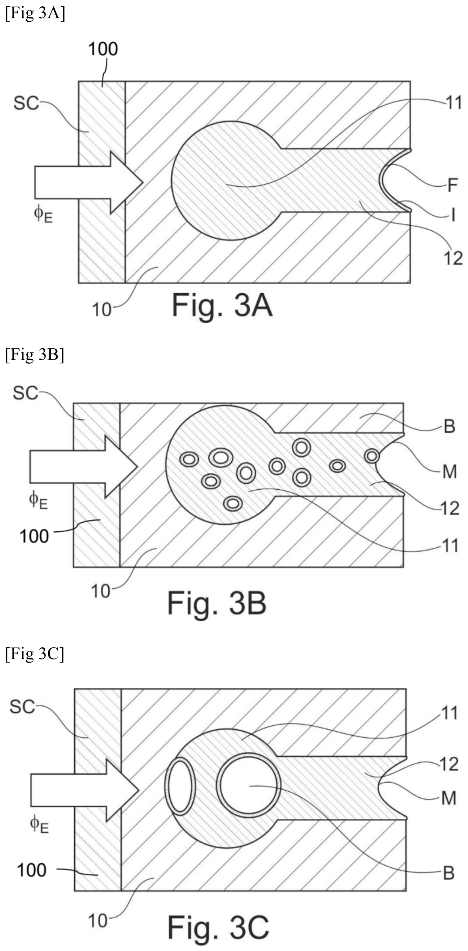

On a illustré de manière schématique en figures 3A à 3C ce phénomène d'apparition des bulles qui peut se produire dans l'évaporateur d'un caloduc à rainures réentrantes à section transversale en forme générale d'Omega et à ailettes, tel que celui illustré à la figure 2.

L'évaporateur d'un tel caloduc 1, axisymétrique de forme générale cylindrique, comprend une paroi périphérique 10 dans laquelle sont réalisés une pluralité de canaux 11 à section transversale en forme générale d'Omega, régulièrement répartis angulairement et débouchant par l'intermédiaire d'un canal de liaison 12 sur un creux central cylindrique 13 dans lequel circule la phase vapeur.

La paroi périphérique 10 est en contact avec une source chaude (SC) par l'intermédiaire d'une ailette 100.

Sur la figure 3A, sous l'effet du flux thermique ϕ_{E} entrant, provenant de la source de chaleur SC, il y a évaporation en film à l'interface I entre liquide et vapeur, la forme d'un film F, aucune bulle n'est créée. Le fonctionnement est nominal.

Sur la figure 3B, il y a une ébullition nucléée, mais la taille des bulles B créées est suffisamment petite pour qu'elles s'échappent par le canal de liaison 12 via le ménisque M à l'interface vers la phase vapeur 13. Toutefois, si la densité des bulles B est trop importante, la mise en place du ménisque M peut être altérée et très dégradée, ce qui altère le pompage capillaire.

Sur la figure 3C, il y a aussi une ébullition avec une taille des bulles B trop importante ou un nombre de bulles trop élevé qui ne leur permet pas de s'échapper par le canal de liaison 12 via le ménisque M vers la phase vapeur. Les bulles B remontent alors dans le canal liquide 11. Il y a également un risque d'asséchement local de la paroi.

La limite d'ébullition est associée à une densité de puissance thermique radiale qui s'exprime généralement en W/m²: elle est proportionnelle à la surface de l'évaporateur du caloduc, c'est-à-dire que pour un même design (même section transversale sur toute la longueur de l'évaporateur), la limite d'ébullition, exprimée en W, d'un caloduc dont la longueur de l'évaporateur est de 10 centimètres est la moitié de celle d'un caloduc dont la longueur d'évaporateur est de 20 centimètres.

La puissance thermique maximum avant l'apparition de la limite d'ébullition est donnée par l'équation suivante: [Equation 1] ${Q}_{ébullition} = \left.{G}_{eq}Δ{T}_{surchauffe}\right|$ avec Geq qui est la conductance équivalente au niveau de l'évaporateur (en W/K), et ΔTsurchauffe, le gradient de température entre la paroi et la température vapeur nécessaire à l'apparition d'une bulle (en K).

Par la relation de Clausius-Clapeyron, on peut relier ΔTsurchauffe au rayon des bulles : [Equation 2] $Δ {T}_{surchauffe} = \frac{{σ}_{l} {T}_{υ}}{{ρ}_{υ} {h}_{lυ}} \left(\frac{1}{{R}_{b}}-\frac{1}{R}\right)$ dans laquelle σ1 désigne la tension superficielle du fluide (N/m), Tv la température de la vapeur ρᵥ la densité de la vapeur, hₗᵥ l'enthalpie de vaporisation du fluide, R_{b} le rayon des bulles et R le rayon du ménisque.

Pour repousser la limite d'ébullition, on peut augmenter donc la conductance à l'évaporateur (Geq), ou augmenter la surchauffe, notamment en modifiant l'état de surface des canaux liquides, afin de diminuer le rayon de bulles. Pour cela, on peut diminuer les rugosités des canaux, ce qui peut par exemple être fait en réalisant un polissage électrolytique des canaux avant ou après usinage ou autre process d'obtention des canaux.

On peut aussi augmenter le rayon du ménisque de l'interface liquide-vapeur mais cela est contre-productif pour les forces de pompage capillaire.

Outre les caloducs à section transversale en Omega, les caloducs à rainures axiales présentent une section transversale cylindrique et la voie de retour du liquide du condenseur vers l'évaporateur est située à la périphérie de cette section cylindrique : [1]. Les caloducs avec d'autres sections, rectangulaires ou carrées, voir triangulaires possèdent cette même caractéristique généralement.

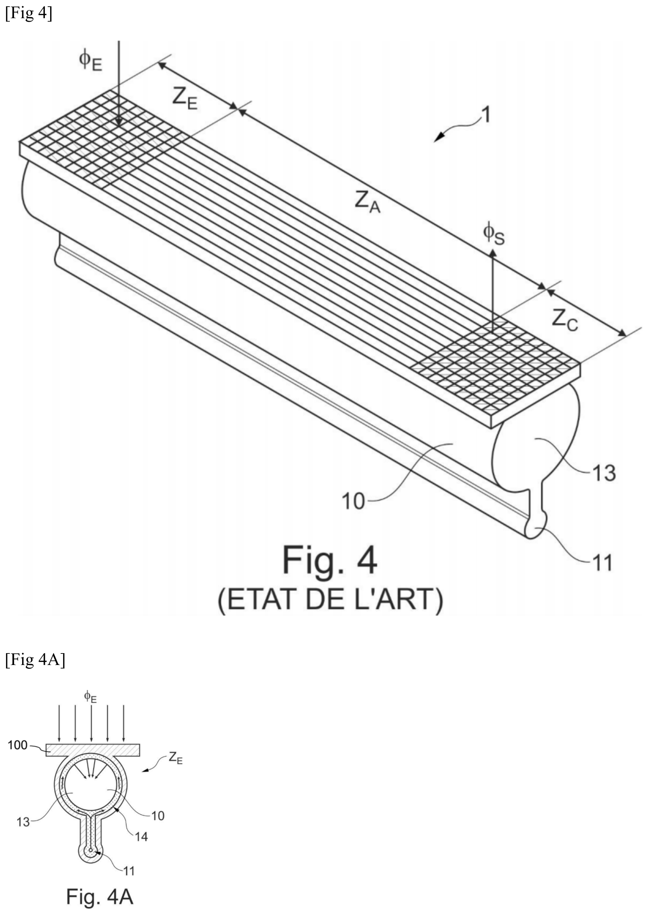

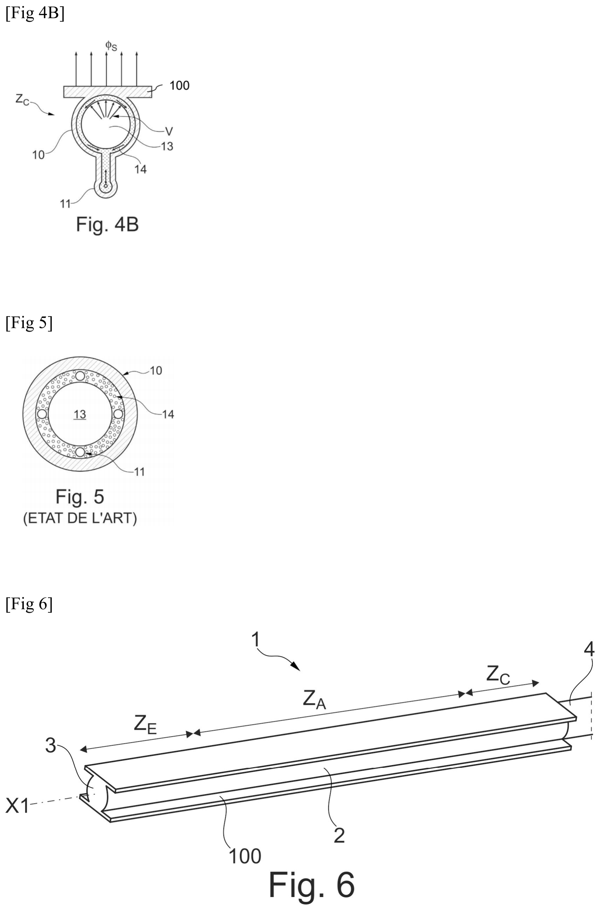

Les caloducs à artère sont favorables pour repousser la limite d'ébullition. Un caloduc 1 à artère est représenté aux figures 4, 4A et 4B : tous comme les autres caloducs rectilignes, il comprend une enceinte étanche délimitée par une paroi 10 et s'étend entre une première extrémité longitudinale, destinée à être échauffée par un flux thermique Φ_{E} émis par une source chaude, pour former, au sein de l'enceinte, un évaporateur Z_{E} et une deuxième extrémité longitudinale destinée à sortir un flux thermique Φ_{S} vers une source froide pour former, au sein de l'enceinte, un condenseur Z_{C} où la vapeur V se condense, l'enceinte étanche délimitant une zone adiabatique Z_{A} entre l'évaporateur et le condenseur.

Un tel caloduc 1 à artère intègre un canal liquide 11 formant une artère qui ramène le liquide depuis le condenseur Z_{C} vers l'évaporateur Z_{E}, qui est dissocié du canal vapeur 13. Dans un tel caloduc, il n'y a pas d'interface liquide-vapeur hormis à l'évaporateur Z_{E} et au condenseur Z_{C}. Cela permet en outre de réduire les forces de frottement de la phase liquide. En plus, la phase liquide au niveau de l'évaporateur Z_{E} n'est pas directement soumise au flux de chaleur Φ_{E} de la source chaude, et cela joue un rôle dans l'éloignement de la limite d'ébullition.

Une configuration très intéressante pour une application terrestre, c'est-à-dire où la gravité s'applique, consiste à intégrer une ou plusieurs des artères 11 dans un milieu poreux 14, périphérique au canal vapeur 13, comme illustré à la figure 5. Ce milieu poreux 14, aussi appelé mèche, peut avoir des pores d'une taille moyenne de quelques centaines de microns au millimètre. En plus de la perte de pression liquide réduite qu'il induit, le milieu poreux 14 assure une très bonne limite d'ébullition au niveau de l'évaporateur par une démultiplication de lignes et de points triples P, c'est-à-dire de points de contact solide-liquide-vapeur, qui sont très favorables à l'évaporation.

Les boucles diphasiques à pompage capillaire constituent également un autre type de dispositifs favorables pour repousser la limite d'ébullition. On pourra se référer à la publication [2] qui donne une définition et décrit précisément ce type de système diphasique de contrôle thermique. Une boucle diphasique à pompage capillaire, comme un caloduc, a pour but de transférer un flux d'énergie thermique depuis une source chaude (évaporateur) vers une source froide (condenseur) en utilisant un fluide à l'équilibre liquide-vapeur et ses changements de phase. Dans une boucle diphasique à pompage capillaire, l'évaporateur et le condenseur sont reliés par des conduites indépendantes et comme le définissent eux-mêmes les auteurs de la publication [2]: contrairement aux caloducs, les phases liquide et vapeur sont séparées et circulent dans le même sens dans des conduites différentes. On pourra également se reporter à la figure 3 pour comprendre la structure d'une telle boucle diphasique, dans laquelle l'évaporateur assure le pompage capillaire, afin d'entraîner la phase liquide provenant du condenseur vers l'évaporateur. Les schémas des figures 3 à 5 proposés par les auteurs de la publication [2] montrent que le flux de chaleur à l'évaporateur n'est pas directement appliqué sur la phase liquide, mais au niveau du milieu poreux qui constitue une interface entre les deux phases, liquide et vapeur, en permettant également une démultiplication des lignes et points triples, favorable à l'évaporation sans créer de potentiels blocages de bulles ou destruction des ménisques, ou bien de reflux de bulles dans le canal liquide. Ainsi, l'évaporateur d'une boucle à pompage capillaire telle que décrite permet d'obtenir une configuration dite en ménisque inversé, ce qui permet d'éloigner la limite d'ébullition, et d'atteindre une très bonne conductance locale.

De nombreuses solutions aux problématiques générales d'interface liquide-vapeur et de limite d'ébullition sont connues dans la littérature scientifique ou technique .

Les auteurs de la publication [3] investiguent une nouvelle structure d'évaporateur à artère et mettent en avant l'intérêt d'appliquer le flux thermique indirectement sur l'interface liquide-vapeur et de prévoir en même temps des dégagements pour l'évacuation de la phase vapeur engendrée.

La publication [4] concerne des caloducs à rainures axiales et démontre que l'association de rainures longitudinales dans la zone adiabatique à un média poreux circonférentiel au niveau de l'évaporateur, a un impact favorable sur la capacité du caloduc à supporter de fortes densités de flux. Le flux thermique est appliqué directement sur une paroi en contact avec le media poreux.

La demande de brevet EP4325155A1 divulgue, dans son mode de réalisation des figures 20 et 21, un caloduc de forme générale parallélépipédique, comprenant un évaporateur à configuration en ménisque inversé par un média poreux interfaçant la phase liquide et la phase vapeur, afin d'augmenter la limite d'ébullition. Cette solution n'est pas applicable à un caloduc de forme générale cylindrique, et montre des limites par rapport à la problématique décrite, spécialement lorsque les sources thermiques imposent une section cylindrique du caloduc

En outre, une forme parallélépipédique, comme celle décrite notamment dans la demande de brevet EP4325155A1 ne peut pas gérer, du fait de sa dissymétrie entre les canaux vapeur sur une face et les canaux liquides sur une autre face, des flux thermiques globaux s'appliquant sur toute la surface externe du caloduc au niveau de l'évaporateur et du condenseur. Autrement exprimé, des sources thermiques globales qui s'appliqueraient sur plusieurs faces de l'évaporateur ou du condensateur ne sont pas applicables, ou alors cela se ferait au détriment de l'efficacité du caloduc (limites de fonctionnement et conductance).

Le brevet US4351388A propose, quant à lui, un caloduc cylindrique avec une configuration en ménisque inversé. Les inventeurs ont identifié plusieurs limitations à un tel caloduc, surtout celles qui impactent directement les performances du dispositif. En effet, les pertes de pression de liquide et de vapeur sont mal proportionnées du fait d'une part des canaux vapeur très petits et d'autre part que le liquide circule dans un média poreux constitué d'une toile métallique et d'un empilement de billes de verre, sur toute la longueur du caloduc. Par ailleurs, les conductances radiales sont faibles:
- à l'évaporateur, le contact thermique entre la paroi périphérique intégrant les canaux vapeur très petits et le media poreux est approximatif, et peut être une source de différence de températures importante,
- au condenseur, le flux thermique doit d'abord traverser le media poreux à billes de verre, peu conductrices thermiquement avant de pouvoir condenser la phase vapeur.

Par conséquent, il existe un besoin pour améliorer encore les caloducs, notamment de forme générale cylindrique, et ce afin à la fois d'y intégrer un évaporateur à configuration de ménisque inversé et d'améliorer les performances et les conditions d'opérabilité du caloduc, grâce à des conductances locales radiales et des limites de pompage capillaire et d'ébullition supérieures.

Le but général de l'invention est alors de répondre au moins en partie à ce besoin.

### Exposé de l'invention

Pour ce faire, l'invention a tout d'abord pour objet un caloduc s'étendant le long d'une première direction longitudinale (X), comprenant une enceinte étanche délimitée par au moins une paroi périphérique, contenant un fluide de travail et s'étendant entre une première extrémité longitudinale, destinée à être échauffée par une source chaude SC pour former, au sein de l'enceinte, un évaporateur (Z_{E}) et une deuxième extrémité longitudinale destinée à être refroidie par une source froide SF pour former, au sein de l'enceinte, un condenseur (Z_{C}), l'enceinte étanche délimitant une zone adiabatique (Z_{A}) entre l'évaporateur et le condenseur, l'évaporateur intégrant un média poreux comprenant une portion oblique adaptée pour guider la phase liquide du fluide de travail depuis la (les) paroi(s) périphérique(s) vers l'intérieur de l'enceinte étanche et une portion allongée selon la direction longitudinale (X), dans le prolongement de la portion oblique, adaptée pour guider la phase liquide jusqu'à la première extrémité longitudinale, la portion oblique comprenant au moins une ouverture débouchante pour laisser passer la phase vapeur du fluide de travail depuis l'espace délimité entre la portion allongée et la paroi périphérique vers la zone adiabatique (Z_{A}).

Le caloduc comprend une pluralité de montants formant des piliers de conduction thermique qui s'étendent selon une deuxième direction (Y) orthogonale à la première direction (X), depuis la paroi périphérique de l'enceinte à partir de laquelle le flux provenant de la source chaude est appliqué, jusqu'au média poreux.

Avantageusement, chaque pilier de conduction thermique a au moins une forme rectiligne, ur toute la hauteur du canal vapeur, selon la deuxième direction (Y).

Selon une variante avantageuse, la forme rectiligne de chaque pilier de conduction thermique présente une section transversale à la deuxième direction (Y), qui est décroissante depuis la face latérale de l'enceinte jusqu'au média poreux.

De manière générale, les piliers de conduction thermique peuvent présenter plusieurs formes (cylindrique, conique, ovoïde, à ailettes,...), afin de réduire le frottement du flux vapeur engendrée au niveau des lignes triples d'évaporation engendrées au niveau des contacts entre piliers et le média poreux. Avantageusement, chaque pilier de conduction thermique est un tronc de cône.

Chaque pilier de conduction thermique peut comprendre avantageusement une ou plusieurs branches formant une (des) ramification(s) qui s'étende(nt) de manière oblique depuis une portion centrale de la forme rectiligne jusqu'au média poreux. Ces ramifications peuvent constituer des piliers raidisseurs. Selon leur dimensionnement et configuration, ils peuvent permettre de s'affranchir de tout raidisseur dans le canal liquide.

De préférence, les piliers de conduction thermique sont agencés en quinconce le long de la direction longitudinale (X). Un tel agencement permet de limiter les pertes de pression de la phase vapeur, i.e. dans le canal vapeur, et d'assurer une répartition du flux homogène au niveau du média poreux.

De préférence encore, les piliers de conduction thermique sont répartis dans l'évaporateur avec une densité et/ou des sections différentes, de préférence réduites, depuis la première extrémité longitudinale jusqu'à la portion oblique du média poreux.

Selon une autre variante avantageuse, la portion oblique comprend plusieurs ouvertures débouchantes. Les ouvertures débouchantes pour laisser passer la phase vapeur sont avantageusement positionnées de telle sorte que les piliers ne chevauchent pas ces ouvertures, et qu'ils présentent le bon compromis de surface de passage par rapport aux pertes de pression engendrées, autant au niveau de la phase vapeur, que de la phase liquide qui s'écoule à l'intérieur du média poreux.

Avantageusement, chaque ouverture débouchante est délimitée par une paroi pleine insérée ou réalisée intégralement avec le média poreux. Une paroi pleine permet de limiter les risques d'entrainement de la phase liquide dans la phase vapeur, et au deuxième ordre des frottements entre la phase vapeur et le milieu poreux.

De manière générale, la porosité et la taille des pores du milieu poreux sont définies de telle sorte à assurer les forces de pompage capillaire adéquates pour compenser les pertes de pression liquide et vapeur dans le caloduc et assurer le bon retour du liquide à l'évaporateur, spécialement lorsque le caloduc fonctionne sans gravité, en position horizontale où légèrement contre la gravité.

Avantageusement, le média poreux a une porosité comprise entre 30 et 75%, et préférentiellement entre 50 et 60%.

La taille des pores du media poreux détermine directement la pression capillaire disponible, plus elle est petite plus la pression capillaire sera forte (Loi de Young Laplace), mais à contrario plus les pertes de charges dans la phase liquide seront importantes.

Avantageusement encore, la taille des pores du média poreux est comprise entre 50 et 100µm. La publication [5] indique notamment une fabrication additive d'aluminium avec un média poreux dont les tailles de pores sont de 50 microns à plusieurs centaines de microns, ce qui permet la réalisation des designs proposés dans le cadre de l'invention.

Suivant l'application, les spécifications de puissance, de niveau de température, et d'intégration des compromis sur la porosité et la taille des pores peuvent être trouvés.

De préférence, le matériau constitutif du média poreux et le cas échéant des piliers de conduction thermique est dans le même que celui de l'enceinte étanche, de préférence choisi parmi l'aluminium, le cuivre, le nickel, le titane ou un alliage à base d'au moins deux de ceux-ci.

Selon un premier mode de fabrication, le média poreux, le cas échéant les piliers de conduction thermique et la paroi périphérique formant l'évaporateur est réalisé par fabrication additive, notamment par frittage sélectif par laser,

Selon un deuxième mode de fabrication, alternatif au premier le média poreux et la paroi périphérique avec le cas échéant les piliers de conduction thermiques sont fabriqués séparément et assemblés mécaniquement entre eux pour former l'évaporateur.

La zone adiabatique et le condenseur peuvent être à rainures, ou à artère, ou à canaux réentrants ou à média poreux épousant la paroi périphérique.

Selon un mode de construction, la zone adiabatique et le condenseur forment un sous-ensemble assemblé mécaniquement à l'évaporateur par soudage. De préférence, le soudage est choisi parmi le soudage à l'arc électrique, le soudage à l'arc (TIG acronyme anglo-saxon pour «Tungsten Inert Gas »), le soudage à l'arc électrique dans une atmosphère gazeuse de protection (MIG ou MAG acronymes anglo-saxon respectivement pour « Metal Inert Gas » et « Metal Active Gas »), le soudage plasma, le soudage laser, le soudage orbital.

Selon la technique envisagée, les dimensions des surépaisseurs périphériques d'extrémité sont adaptées.

Dans certains cas, lorsque les épaisseurs de paroi sont assez épaisses, typiquement de quelques millimètres et des emboitements pour le centrage entre évaporateur et le sous-ensemble zone adiabatique/condenseur peuvent être agencés. Ceci représente un avantage dans l'intégration du caloduc dans un système.

Ainsi, de préférence les portions assemblées entre elles par soudage sont préalablement emboitées au moins partiellement l'une dans l'autre.

Selon une configuration avantageuse, le caloduc est de forme générale cylindrique, d'axe central (X1), la portion oblique étant alors une portion tronconique et la portion allongée étant un cylindre, centrées sur l'axe central (X1).

Selon une autre configuration avantageuse, le caloduc est de forme générale parallélipédique droite, d'axe longitudinal (X2), la portion oblique étant alors une portion trapézoïdale et la portion allongée étant un parallélépipède droit, centrées sur l'axe (X2).

L'invention a également pour objet un système comprenant :
- une source froide (SF) ;
- une source chaude (SC) et
- au moins un caloduc tel que décrit précédemment, le caloduc étant agencé de sorte que le flux de chaleur de la source chaude (SC) sur l'évaporateur étant sur au moins une ailette ou une face latérale de l'enceinte en regard du canal vapeur délimité par le média poreux, tandis que l'extraction de chaleur au condenseur vers la source froide (SF) est sur au moins ailette ou une face latérale de l'enceinte en regard du(des) canal(ux) liquide(s), ou sur une face latérale perpendiculaire à celui-ci (ceux-ci).

Ainsi, l'invention consiste essentiellement à proposer un caloduc dont l'évaporateur est conçu en intégrant un média poreux de forme permettant l'évacuation de la phase vapeur du fluide de travail du caloduc en retour vers la zone adiabatique à travers une portion oblique sans interférer avec la phase liquide saturant ledit média.

Avantageusement pour transmettre directement par conduction la chaleur émise par la source chaude au moyen de piliers de conduction thermique dans le canal vapeur qui alimente au plus proche les lignes/points d'évaporation configurés aux interfaces liquide-vapeur (ménisques) entre pilier et le média poreux, et sans gêner la circulation du flux de vapeur.

En alimentant ainsi directement le média poreux par le flux thermique les points d'évaporation, on augmente la limite d'ébullition à l'évaporateur.

La mise en forme de ces piliers doit être significative afin d'offrir le meilleur compromis entre conductance radiale locale (W/°C) sans être trop invasif et dense de telle sorte à ne pas créer des pertes de pression coté vapeur trop importante en réduisant drastiquement la section de passage. Les contacts thermiques réalisés avec les piliers de conduction, à la fois au niveau de la paroi périphérique et de la portion allongée du média poreux, sont avantageusement avec la meilleure qualité possible afin de favoriser la meilleure conductance radiale.

Des recherches récentes ont montré que le contact thermique entre un pilier de transmission de flux thermique et un média poreux saturé de liquide, dans le cas d'une configuration d'évaporateur en ménisque inversé, n'était pas obligé d'être parfait, et qu'un espacement de 200 µm à 500µm, qui peut correspondre à l'ordre de grandeur légèrement supérieur à la taille de pores effective du media poreux, pouvait avoir un effet bénéfique sur les régimes de fonctionnement, i.e. de conductance en fonction de la densité de flux appliquée : [6].

Autrement exprimé, à la sortie de la zone adiabatique, la phase liquide vers l'évaporateur est contenue au niveau de la ou des parois périphériques du caloduc, dans des rainures ou un média poreux. Les forces capillaires mises en jeu au niveau des canaux liquide et vapeur et à l'échelle du caloduc, permettent d'une part de contenir la phase liquide et d'autre part de mettre en œuvre les gradients de pression nécessaires et bien dimensionnés au bon fonctionnement du caloduc.

A la jonction entre zone adiabatique et l'évaporateur, la portion oblique d'un média poreux permet de guider la phase liquide depuis la ou les parois périphériques vers l'intérieur de l'évaporateur jusqu'à l'extrémité longitudinale du caloduc.

Une fois la phase vapeur générée entre la portion allongée et la paroi périphérique du caloduc, la phase vapeur doit migrer par différence de pression vers le condenseur, en passant par la zone adiabatique du caloduc.

Les ouvertures débouchantes permettent à la vapeur de traverser le média poreux au niveau de la portion oblique.

La répartition de ces ouvertures est avantageusement réalisée selon un compromis de surface de passage disponible sans perturber le retour de la phase liquide, i.e. réduire la section de passage du liquide dans le média poreux augmenterait ces pertes de charges, et en mettant en œuvre le plus efficacement possible les lignes triples à la transition entre un pilier de conduction thermique et le média poreux saturé en liquide, dans sa portion oblique.

Cette fonction d'évacuation de la vapeur, requiert le maintien de la phase liquide dans le média poreux, en particulier lorsque la gravité est en place et applique une force sur la phase liquide contenue dans le média poreux qui tend à l'extraire de celui-ci.

Selon l'équation 1 ci-après, le nombre de Bond est le ratio entre forces gravitationnelle et forces de capillarité. [Equation 1] $Bo = \left(Δρ g {L}^{2}\right) / σ$ dans laquelle
Δρ est le contraste des masses volumiques des deux fluides, en kg/m³,
g l'accélération gravitationnelle, en m/s²,
σ la tension superficielle, en N/ m,
L la longueur caractéristique, comme le rayon d'un pore où s'établie le ménisque, en m.

Ce nombre Bo doit être inférieur à 1 pour que la phase liquide reste dans le média poreux, et un ordre d'1/10 est pris comme marge de sécurité. Par exemple, pour une taille de pore de 100µm, à 80°C, pour l'eau et l'ammoniac en tant que fluide de travail le nombre de bond Bo vaut respectivement, 0,00125 et 0,00538.

Ainsi, la phase liquide reste dans le media poreux grâce aux forces de capillarité.

L'invention apporte de nombreux avantages parmi lesquels on peut citer ceux par rapport aux solutions selon l'état de l'art, la possibilité de réaliser une configuration à ménisque d'interface liquide-vapeur inversé pour un caloduc de section cylindrique et grâce à cette configuration une amélioration des performances et des conditions d'opérabilité du caloduc, grâce à des conductances locales radiales et des limites de pompage capillaire et d'ébullition supérieures.

En plus des applications non terrestres, où le pompage capillaire est primordial, et compte tenu des densités de flux de plus en plus importantes de composants à thermaliser, l'invention s'applique avantageusement dans toutes les applications où les caloducs sont nécessaires pour faire du management thermique passif, avec une ou des sources chaudes (et froide potentiellement) continues et appliquées dans trois plans différents.

Des applications comme le stockage thermique, la récupération d'énergie solaire thermique, les échangeurs à caloducs, des applications de génie nucléaire (autre fluide que de l'eau ou de l'ammoniac, métaux liquides préconisés) sont intéressantes pour l'invention.

D'autres avantages et caractéristiques ressortiront mieux à la lecture de la description détaillée, faite à titre illustratif et non limitatif, en référence aux figures suivantes.

### Brève description des dessins

[Fig 1] la figure 1 illustre la courbe délimitant le domaine de fonctionnement pour un exemple de caloduc à pompage capillaire.
[Fig 2] la figure 2 est une reproduction photographique d'un exemple de caloduc à rainures réentrantes à section transversale en Omega selon l'état de l'art.
[Fig 3A], [Fig 3B], [Fig 3C] les figures 3A, 3B, 3C sont des vues schématiques en coupe transversale et en détail montrant différentes situations d'ébullition qui ont lieu dans un évaporateur d'un caloduc selon la figure 2.
[Fig 4] la figure 4 est une vue schématique d'un caloduc à artère selon l'état de l'art.
[Fig 4A], [Fig 4B] les figures 4A et 4B sont des vues en coupe transversale de la figure 4, respectivement au niveau de l'évaporateur et du condenseur du caloduc à artère selon l'état de l'art.
[Fig 5] la figure 5 est une vue en coupe transversale d'une variante de caloduc à artères selon l'état de l'art.
[Fig 6] la figure 6 est une vue en perspective d'un caloduc de forme cylindrique à ailettes selon l'invention.
[Fig 7] la figure 7 est une vue schématique en coupe longitudinale d'une partie d'un évaporateur à média poreux d'un caloduc selon l'invention et de sa jonction avec la zone adiabatique.
[Fig 8] la figure 8 reprend la figure 7 mais avec l'intégration de piliers de conduction thermique pour la réalisation d'un évaporateur selon l'invention.
[Fig 9] la figure 9 est une vue en coupe longitudinale, en perspective et par transparence d'un évaporateur d'un caloduc selon le mode de la figure 8 et de sa jonction avec la zone adiabatique.
[Fig 10] la figure 10 illustre, en perspective une variante de réalisation avantageuse de la portion tronconique du média poreux de l'évaporateur selon l'invention.
[Fig 11] la figure 11 schématise les lignes de flux thermique, de flux fluidique massique et des lignes triples d'évaporation dans une configuration à ménisque inversé d'un évaporateur avec les piliers de conduction thermique selon le mode de la figure 8.
[Fig 12], [Fig 12A] les figures 12 et 12A illustrent en coupe longitudinale et en coupe selon A-A, une variante de réalisation d'un média poreux d'évaporateur selon l'invention, dédiée à une configuration où le flux de chaleur de la source chaude (SC) est uniquement sur une ailette du caloduc.
[Fig 13] la figure 13 est une vue en coupe longitudinale partielle et en perspective d'un évaporateur à média poreux d'un caloduc de forme parallépipédique droite selon l'invention.

### Description détaillée

Les figures 1 à 5 ont déjà été commentées en préambule. Elles ne sont pas détaillées ci-après.

Par souci de clarté, un même élément selon l'art antérieur et l'invention est désigné par la même référence numérique.

On précise ici que la référence SC utilisée dans les figures désigne la source chaude ou, par extension, la zone d'application du flux thermique Ø_{E} émis par la source chaude directement sur la face latérale d'une enceinte de caloduc.

Sur la figure 6, on peut voir un exemple de caloduc 1 de forme cylindrique selon l'invention, à ailettes 100 sur lesquelles le flux thermique Ø_{E} s'applique.

Sur cette figure 6, l'exemple de caloduc 1 s'étendant selon un axe central X1 est vu de l'extérieur.

Le caloduc 1 comporte une enceinte étanche 2 s'étendant selon l'axe longitudinal X entre une première extrémité longitudinale 3 et une deuxième extrémité longitudinale 4. La première extrémité 3 est par exemple destinée à être à être échauffée par une source chaude SC pour former au sein de l'enceinte un évaporateur Z_{E}. La deuxième extrémité longitudinale 4 est destinée à être refroidie par une source froide SF pour former au sein de l'enceinte un condenseur Z_{C}.

L'enceinte étanche 2 délimite intérieurement une zone adiabatique Z_{A} entre l'évaporateur et le condenseur.

La source chaude est par exemple un composant électrique ou électronique, un stockage de chaleur, un réacteur chimique exothermique. La source froide est par exemple une surface radiative, des ailettes en convection forcée, des plaques froides en écoulement mono ou diphasique, un stockage de froid, une réaction chimique endothermique...

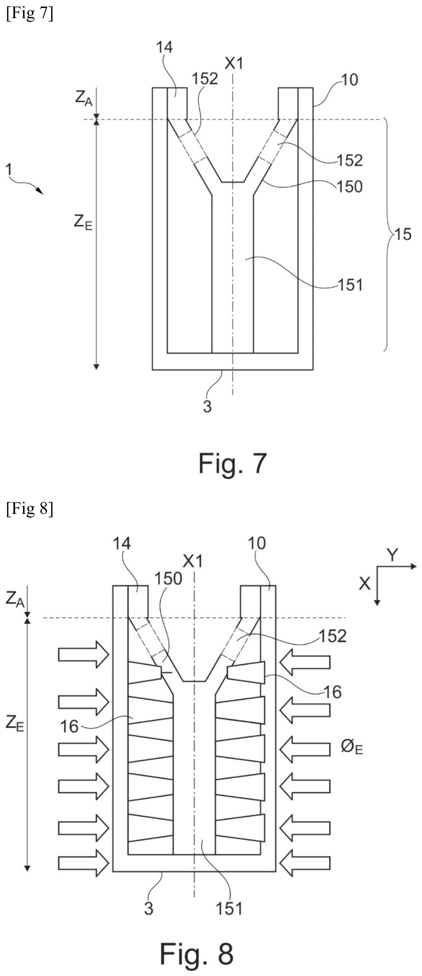

Selon l'invention, comme illustré à la figure 7, l'évaporateur Z_{E} intègre un média poreux 15 comprenant une portion tronconique 150 centrée sur l'axe central X1 et une portion allongée 151 sous la forme d'un cylindre centré sur l'axe X1, dans le prolongement de la portion oblique 150.

La portion tronconique 150 permet guider la phase liquide du fluide de travail depuis la paroi périphérique 10 vers l'intérieur de l'enceinte étanche 2.

La portion cylindrique 151 permet de guider la phase liquide jusqu'à la première extrémité longitudinale 3.

La portion tronconique 150 comprend au moins une ouverture débouchante 152, de préférence plusieurs ouvertures 152 pour laisser passer la phase vapeur du fluide de travail depuis l'espace délimité entre la portion allongée et la paroi périphérique vers la zone adiabatique (Z_{A}).

Ainsi, selon l'invention, à la sortie de la zone adiabatique (Z_{A}), la phase liquide vers l'évaporateur est contenue au niveau de la paroi périphérique 10 du caloduc, dans un média poreux 14. En lieu et place du média poreux 14, la zone adiabatique peut être à canaux réentrants ou à rainures.

A la jonction entre zone adiabatique et l'évaporateur, la portion tronconique 150 permet de guider la phase liquide depuis la paroi périphérique 10 vers l'intérieur de l'évaporateur jusqu'à l'extrémité longitudinale 3.

Une fois la phase vapeur générée entre la portion cylindrique 151 et la paroi périphérique 10 du caloduc, la phase vapeur va migrer par différence de pression vers le condenseur, en passant par la zone adiabatique du caloduc.

Les ouvertures débouchantes 152 permettent à la vapeur de traverser le média poreux au niveau de la portion oblique 150.

La figure 8 illustre un évaporateur selon l'invention avec une pluralité de montants 16 formant des piliers de conduction thermique selon une deuxième direction (Y), depuis la paroi périphérique 10 de l'enceinte à partir duquel le flux provenant de la source chaude SC est appliqué, jusqu'au média poreux 15.

La mise en œuvre du média poreux 15 doit être faite de sorte à s'assurer d'un très bon contact thermique entre les piliers de conduction thermique 16 et la matière du média au niveau de leurs zones de contact.

Les piliers de conduction thermique 16 peuvent être répartis dans l'évaporateur avec une densité et/ou des sections différentes, de préférence réduites, depuis la première extrémité longitudinale jusqu'à la portion oblique du média poreux. Cela permet de préserver la distribution du flux thermique et minimiser les pertes de charges de la phase vapeur.

Par exemple comme schématisé à la figure 8, on peut prévoir des piliers larges, proches de l'extrémité 3 de l'évaporateur, et plus de piliers plus fins à proximité de la zone adiabatique.

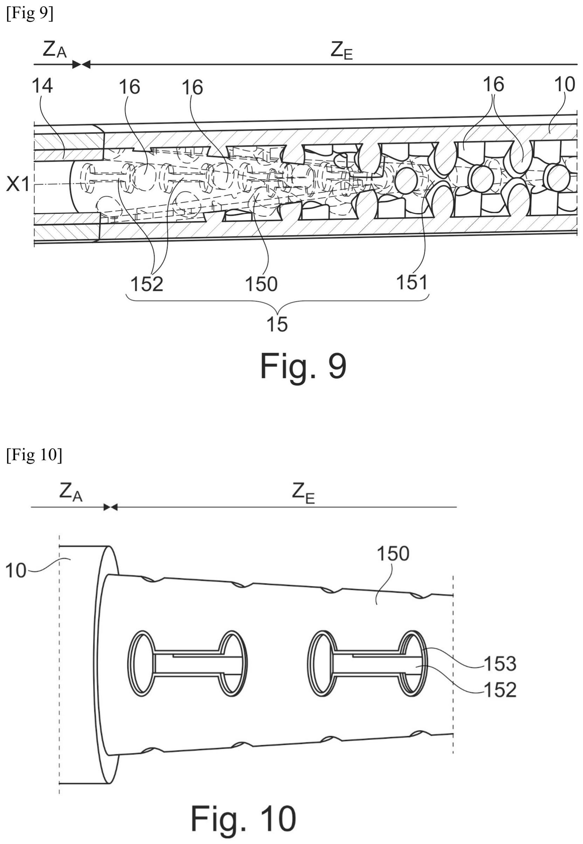

La figure 9 reprend la configuration de la figure 8 et illustrent que les ouvertures débouchantes 152 de passage pour la phase vapeur sont décalés des zones de contact entre piliers de conduction thermique 16 et la surface du média poreux 15. Ce décalage ou autrement dit cette absence de chevauchement entre piliers 16 et ouvertures débouchantes 152 permet de garantir un bon compromis entre surface de passage par rapport aux pertes de pression engendrées, autant au niveau de la phase vapeur, que de la phase liquide qui s'écoule à l'intérieur du média poreux 15.

On visualise également sur cette figure 9, un agencement des piliers 16 en quinconce selon la direction X qui permet de minimiser les pertes de pression de la phase vapeur et d'assurer une répartition du flux homogène au niveau du média 15.

Comme montré à la figure 10, chaque ouverture débouchante 152 peut être délimitée par une paroi pleine 153 qui peut être insérée ou réalisée intégralement avec le média poreux 15. Ces parois pleines 153 permettent de limiter les risques d'entrainement de la phase liquide dans la vapeur, et au deuxième ordre des frottements entre la phase vapeur et le milieu poreux.

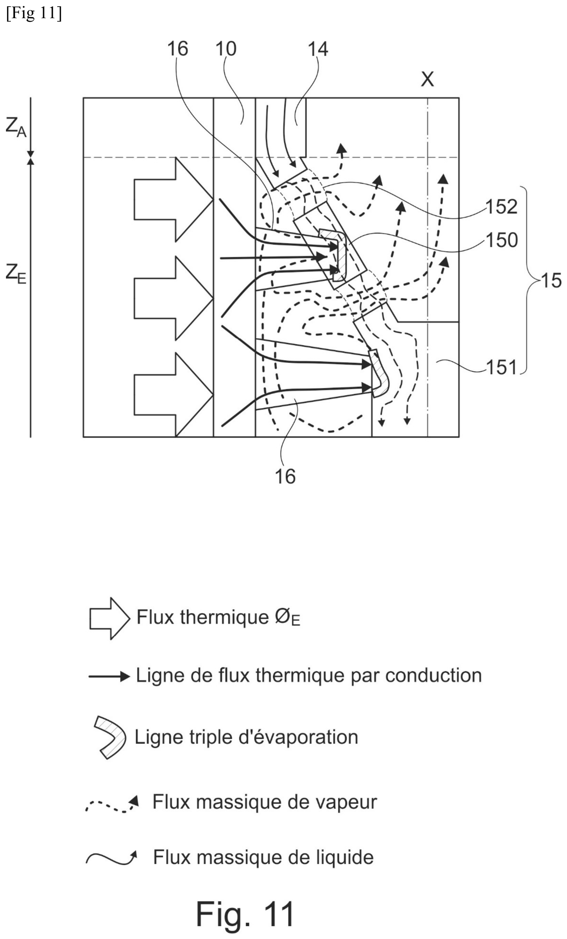

La figure 11 montre les différents lignes de flux et lignes triples au sein d'un évaporateur selon l'invention. La conduction du flux thermique s'effectue depuis une ailette 100, à travers la paroi périphérique solide 10, puis par les piliers de conduction thermique 16 jusqu'aux lignes triples des zones de contact entre piliers 16 et média poreux 15.

Depuis les lignes triples, l'évaporation de la phase liquide contenue dans la portion tronconique 150 du média poreux 15 s'initie. La phase vapeur est créée dans le volume entre le média poreux 15 et la paroi périphérique 10, puis passe par les ouvertures débouchantes 152 du média poreux 15, pour se retrouver in fine dans la zone adiabatique Z_{A} au centre de la section de l'enceinte 2.

Dans cette zone adiabatique Z_{A}, la phase liquide provenant du condenseur Z_{C} est contenue dans le média poreux 14 et migre via un gradient de pression dans la portion tronconique 150 du média poreux 14, où elle est évaporée au niveau des lignes triples constituant les ménisques d'interfaces liquide-vapeur.

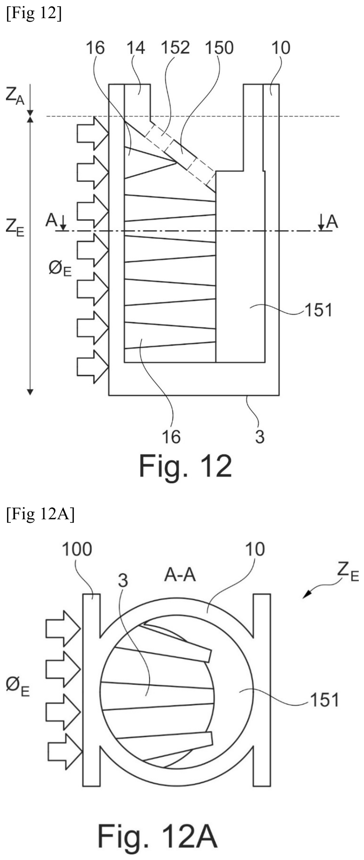

Dans une configuration où la source chaude SC est uniquement appliquée sur une seule des ailettes 100, i.e. que d'un côté du caloduc, on peut prévoir une portion tronconique 150 réduite et une portion centrale 151 avec une forme légèrement dissymétrique, comme illustré aux figures 12 et 12A.

Tous les exemples illustrés précédents se rapportent à un caloduc 1 de forme générale cylindrique.

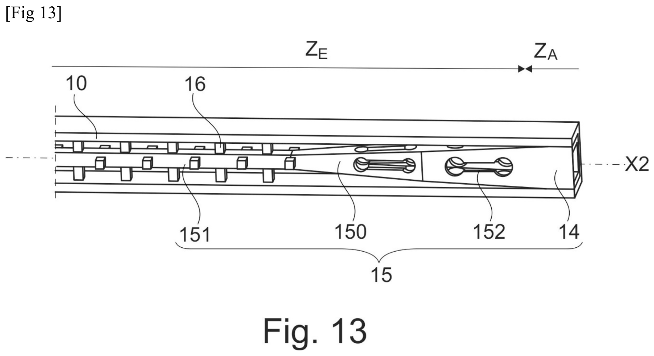

L'invention peut être mise en œuvre pour un caloduc de forme générale parallépipédique droite telle qu'illustrée à la figure 13 : la portion oblique 150 peut être alors avantageusement une portion trapézoïdale et la portion allongée 151 un parallélépipède droit centrés sur l'axe longitudinal (X2) du caloduc.

Comme montré également sur cette figure 13, les piliers de conduction thermique 16 peuvent également être de forme générale parallépipédique droite.

D'autres avantages et améliorations pourront être apportés sans pour autant sortir du cadre de l'invention.

L'invention n'est pas limitée aux exemples qui viennent d'être décrits; on peut notamment combiner entre elles des caractéristiques des exemples illustrés au sein de variantes non illustrées.

Un caloduc est rempli d'un fluide diphasique, il peut s'agir d'un fluide bien connu de l'homme du métier. Celui-ci est choisi par exemple en fonction de la gamme de température de fonctionnement et de stockage du dispositif, en fonction des contraintes dues à la pression, l'inflammabilité, la toxicité du fluide et de la compatibilité chimique entre le fluide et le matériau formant le caloduc.

De plus, certains fluides ne sont pas compatibles avec certains matériaux, des réactions d'oxy-réduction pouvant conduire à des phénomènes corrosifs impliquant des produits de réaction, par exemple des gaz incondensables, dégradant le fonctionnement hydrodynamique des caloducs.

A titre d'exemple, pour un caloduc selon l'invention réalisé en alliage d'aluminium en nickel, en cuivre, en titane ou en alliage à base d'une combinaison d'entre eux, qui est soit assemblé par brasure eutectique, soit réalisé par fabrication additive métallique, on peut utiliser comme fluide l'ammoniac, l'eau, l'acétone, le méthanol, ....

Du fait des limites d'utilisation, entre les fluides de travail et les métaux cités, les couples envisagés peuvent être comme suit :

| **Fluide de travail** | **Métal(ux) du caloduc** |
|---|---|
| Ammoniac | Aluminium, acier, acier inoxydable, nickel |
| Méthanol | Cuivre, acier inoxydable |
| Acétone | Aluminium, acier inoxydable |
| Eau | Cuivre, nickel, titane |

### Liste des références citées

[1]: Christine Hoa :«Thermique des caloducs à rainures axiales : études et réalisations pour des applications spatiales». Université de Poitiers, 2004.
[2]: Jocelyn Bonjour, et al.: «Systèmes diphasiques de contrôle thermique - Boucles capillaires et gravitaires ». Techniques de l'ingénieur BE9546 v1 (2011).
[3]: Lizhan Bi,Lanpei et al.: «Pool boiling with high heat flux enabled vapours artery structure» Appl. Phys. Lett. 108,23901 (2016); https:/doi.org/10.1063/1.495374.
[4]:https://www.1-act.com/case-studies/high-heat-flux-50-w-cm2-hybrid-constant-conductance-heat-pipes/
[5]: Jafari et al. 2018, «The utilization of selective laser melting technology on heat transfer devices for thermal energy conversion applications: A review». Renewable and Sustainable Energy Reviews 91 (2018) 420-442. https://doi.org/10.1016/j.rser.2018.03.109.
[6]: M. J. Schertzer, D. Ewing, et C. Y. Ching, « The effect of gap distance on the heat transfer between a heated finned surface and a saturated porous plate », International Journal of Heat and Mass Transfer, vol. 49, no 21-22, p. 4200-4208, oct. 2006, doi: 10.1016/j.ijheatmasstransfer.2006.03.020.

## Revendications

1. Caloduc (1) s'étendant le long d'une première direction longitudinale (X), comprenant une enceinte étanche (2) délimitée par au moins une paroi périphérique (10), contenant un fluide de travail et s'étendant entre une première extrémité longitudinale (3), destinée à être échauffée par une source chaude SC pour former, au sein de l'enceinte, un évaporateur (Z_{E}) et une deuxième extrémité longitudinale (4) destinée à être refroidie par une source froide SF pour former, au sein de l'enceinte, un condenseur (Z_{C}), l'enceinte étanche délimitant une zone adiabatique (Z_{A}) entre l'évaporateur et le condenseur, l'évaporateur intégrant un média poreux (15) comprenant une portion oblique (150) adaptée pour guider la phase liquide du fluide de travail depuis la (les) paroi(s) périphérique(s) vers l'intérieur de l'enceinte étanche et une portion allongée (151) selon la direction longitudinale (X), dans le prolongement de la portion oblique (150), adaptée pour guider la phase liquide jusqu'à la première extrémité longitudinale (3), la portion oblique comprenant au moins une ouverture débouchante (152) pour laisser passer la phase vapeur du fluide de travail depuis l'espace délimité entre la portion allongée et la paroi périphérique vers la zone adiabatique (Z_{A}), le caloduc comprenant une pluralité de montants (16) formant des piliers de conduction thermique qui s'étendent selon une deuxième direction (Y) orthogonale à la première direction (X), depuis la paroi périphérique (10) de l'enceinte à partir de laquelle le flux provenant de la source chaude est appliqué, jusqu'au média poreux (15).

2. Caloduc (1) selon la revendication 1, chaque pilier de conduction thermique ayant une forme rectiligne, selon la deuxième direction (Y).

3. Caloduc (1) selon l'une des revendications 1 ou 2, chaque pilier de conduction thermique ayant au moins une forme rectiligne sur toute la hauteur du canal vapeur, selon la deuxième direction (Y).

4. Caloduc (1) selon la revendication 3, chaque pilier de conduction thermique présentant une section transversale à la deuxième direction (Y), qui est décroissante depuis la face latérale de l'enceinte jusqu'au média poreux (15).

5. Caloduc (1) selon la revendication 3 ou 4, chaque pilier de conduction thermique étant un tronc de cône.

6. Caloduc (1) selon l'une des revendications précédentes, chaque pilier de conduction thermique comprend une ou plusieurs branches formant une (des) ramification(s) qui s'étende(nt) de manière oblique depuis une portion centrale de la forme rectiligne jusqu'au média poreux.

7. Caloduc (1) selon l'une des revendications précédentes, les piliers de conduction thermique étant agencés en quinconce le long de la direction longitudinale (X).

8. Caloduc (1) selon l'une des revendications précédentes, les piliers de conduction thermique étant répartis dans l'évaporateur avec une densité et/ou des sections différentes, de préférence réduites, depuis la première extrémité longitudinale jusqu'à la portion oblique du média poreux .

9. Caloduc (1) selon l'une des revendications précédentes, la portion oblique comprenant plusieurs ouvertures débouchantes (152).

10. Caloduc (1) selon l'une des revendications précédentes, chaque ouverture débouchante (152) étant délimitée par une paroi pleine (153) insérée ou réalisée intégralement avec le média poreux.

11. Caloduc (1) selon l'une des revendications précédentes, le média poreux (15) ayant une porosité comprise entre 30 et 75%, et préférentiellement entre 50 et 60%.

12. Caloduc (1) selon la revendication 11, la taille des pores du média poreux étant comprise entre 50 et 100µm.

13. Caloduc (1) selon l'une des revendications précédentes, le matériau constitutif du média poreux et le cas échéant des piliers de conduction thermique étant dans le même que celui de l'enceinte étanche, de préférence choisi parmi l'aluminium, le cuivre, le nickel, le titane ou un alliage à base d'au moins deux de ceux-ci.

14. Caloduc (1) selon l'une des revendications précédentes, le média poreux, le cas échéant les piliers de conduction thermique et la paroi périphérique formant l'évaporateur étant réalisés par fabrication additive, notamment par frittage sélectif par laser, ou le média poreux et la paroi périphérique avec le cas échéant les piliers de conduction thermiques étant fabriqués séparément et assemblés mécaniquement entre eux pour former l'évaporateur.

15. Caloduc (1) selon l'une des revendications précédentes, la zone adiabatique et le condenseur étant à canaux réentrants, à rainures ou à média poreux (14) épousant la paroi périphérique.

16. Caloduc (1) selon l'une des revendications précédentes, la zone adiabatique et le condenseur formant un sous-ensemble assemblé mécaniquement à l'évaporateur par soudage.

17. Caloduc (1) selon la revendication 16, les portions assemblées entre elles par soudage étant préalablement emboitées au moins partiellement l'une dans l'autre.

18. Caloduc (1) selon l'une des revendications précédentes, de forme générale cylindrique, d'axe central (X1), la portion oblique étant une portion tronconique et la portion allongée étant un cylindre centrés sur l'axe central (X1).

19. Caloduc (1) selon l'une des revendications précédentes, de forme générale parallélipédique droite, d'axe longitudinal (X2), la portion oblique étant une portion trapézoïdale et la portion allongée étant un parallélépipède droit centrés sur l'axe (X2).

20. Système comprenant :
- une source froide (SF) ;
- une source chaude (SC) et
- au moins un caloduc (1) selon l'une des revendications précédentes, le caloduc étant agencé de sorte que le flux de chaleur de la source chaude (SC) sur l'évaporateur étant sur au moins une ailette (100) ou une face latérale (21) de l'enceinte (2) étanche en regard du canal vapeur délimité par le média poreux, tandis que l'extraction de chaleur au condenseur vers la source froide (SF) étant sur au moins une ailette (100) ou une face latérale de l'enceinte en regard du(des) canal(ux) liquide(s), ou sur une face latérale perpendiculaire à celui-ci (ceux-ci).
